# EUROPEAN PATENT SPECIFICATION

(11) **EP 4 093 556 B1**
(45) Date of publication and mention of the grant of the patent: **27.03.2024**
(21) Application number: 21700779.8
(22) Date of filing: 20.01.2021
(51) Int. Cl.: B05B 11/10, B05B 11/00, B05B 15/14, B05B 15/30

(54) **BOTTLE AND REFILL**
FLASCHE UND NACHFÜLLUNG
BOUTEILLE ET RECHARGE

(30) Priority: 21.01.2020 US 202062964073 P; 02.04.2020 EP 20167791
(43) Date of publication of application: 30.11.2022
(73) Proprietor: Unilever IP Holdings B.V., 3013 AL Rotterdam (NL); Unilever Global IP Limited, Wirral, Merseyside CH62 4ZD (GB)
(72) Inventor: DAIGLER, Meegan, Portland, ME 04101 (US); KWAK, Albert, J., Brooklyn, NY 11205 (US); PARADISE, Charles, Simon, Brooklyn, NY 11205 (US)
(74) Representative: Fijnvandraat, Arnoldus
(86) International application number: PCT/EP2021/051155
(87) International publication number: WO 2021/148444

(56) References cited:
- WO-A1-02/43611
- US-A- 3 655 096
- US-A- 5 836 479
- US-A1- 2014 190 863
- US-A1- 2017 014 843

## Description

### Background of the Invention

Around the globe, there is increasing concern about the plastic waste which is generated in modern societies. Of particular concern is the pollution of our oceans with plastic containers and the like.

Many consumer products are sold in plastic packages which see a single use, after which they are discarded. One solution which has been proposed is the use of reusable shell packages for day-to-day enjoyment of the product and smaller refill packages for replenishing the product after it has been depleted.

The advantage of this is that the larger, sturdier package is re-used whereas the packages which are used for replenishing the product time and again are smaller and sparing of plastic.

While there is increasing awareness of the problem of plastic waste, unfortunately that does not necessarily translate into acceptance of inconvenient products or packages. Thus, it is important that any refill which is to enjoy consumer acceptance must be easy and convenient to use. Also, the refill should work well and not result in a mess.

Prior refills have been proposed in the patent literature. These include those disclosed in Mueller et al. US Patent No. 8,794,474 Cesare et al. WO 2018/114301 and Easter US Patent No. 3,655,096.

Easter US Patent No. 3,655,096 discloses a container including a bottle and a replaceable cartridge removably disposed in the mouth of the bottle. The cartridge contains a small amount of a chemical to be diluted. A dip tube extends downwardly from a cap and is introduced into the bottle by thrusting its free end through the cartridge, thereby perforating the same and allowing the chemical in the cartridge to drain into the bottle.

Klima, et al. US Patent No. 5,836,479 discloses a chemical reservoir within a spray bottle dispenser. The bottom wall of the reservoir has a groove which is breakable by the tip of a bayonet when it is rupturing the bottom wall of the reservoir to release chemical concentrate into the spray bottle.

Easter discloses a container for diluting and dispensing materials in liquid form that comprises a primary vessel, e.g., a bottle, adapted to contain a diluent such as water and a replaceable cartridge mounted removably in the mouth of the bottle. The cartridge contains a relatively small amount of a chemical concentrate that is to be diluted. A dispensing mechanism composed of a pump with a bottle cap at its lower end is used to withdraw the contents of the container. A dip tube that extends downwards from the cap is introduced into the bottle by thrusting its free end through the top and bottom of the cartridge thereby perforating the same and allowing the material in the cartridge to drain into the bottle.

### Summary of the Invention

The present invention pertains to a refill cartridge, a bottle and combination bottle/cartridge which are easy to use and results in the use of less plastic. In accordance with a first embodiment, the invention comprises a cartridge suitable for use as a refill. The cartridge includes a body having a receptacle for receiving a product and a closure at its top, The closure includes a fastener for fastening the closure to the body, a closing platform including an opening, and a seal covering the opening. The seal is openable whereby to breach the seal and permit a pump dip tube to traverse the cartridge. The bottom of the cartridge likewise includes a sealed opening which can be breached by a dip tube, whereby to permit product to escape from the cartridge into the body of the bottle. At least one of the seals comprises an in mold label.

The cartridge preferably includes a concentrated product which can be diluted with water in the bottle. Thus, the cartridge is smaller and contains less plastic than would be present in a full-sized one time-use bottle. Since it uses a modest amount of plastic, discarding or recycling the cartridge is an improvement over one-time use full sized packages.

Preferably, the above-described cartridge includes indicia visible from the outside of the cartridge. The indicia may be on one or more flaps extending downwardly from the top of the closure along at least part of a side of the cartridge. For example, there may be two opposing flaps comprising wings, one on each side of the cartridge.

In another embodiment, the invention is directed to a combined bottle and cartridge. The cartridge may, but need not be, the above described cartridge. The cartridge is received within the bottle and includes a closure at its top comprising at least one flap extending downwardly. An aperture or window is included in at least one of the bottle closure and bottle body. At least a portion of the flap is visible when the bottle closure is secured to the bottle. Thus, by placing indicia on the flap, such as a distinct color for each variant of product, it is possible for the consumer to see which variant is in the refill currently in the bottle.

In yet another embodiment, the invention includes a combined bottle and cartridge wherein the cartridge closure comprises a closing platform including an opening, and a seal covering the opening, the seal being openable when pierced by a dip tube. A seal on the bottom of the cartridge can be penetrated by the dip tube, which is preferably beveled, to permit fluid product to exit the cartridge. The container may include a pump attached to the dip tube.

The bottle/cartridge of the invention is particularly useful for concentrated products, such as body wash, wherein a concentrated body wash is contained within the refill and then diluted by combining with water in the body of the bottle. By use of a concentrate, less plastic is needed for the refill. The bottle, which accommodates the full volume of the diluted product, is reusable by the consumer. Thus, even if the bottle is made of plastic, plastic is conserved since the bottle is re-used. Still more preferably, the bottle is not made of plastic, e.g., is made of stainless steel or aluminum.

In another embodiment, the invention is directed to a bottle having an aperture or window suitable for viewing a cartridge therewithin. The bottle includes a closure and a body, and the aperture or window may be present in at least one of the closure and the body.

The invention is also directed to the process of using the cartridge and bottle to replenish and reuse the bottle.

For a more complete understanding of the above and other features and advantages of the invention, reference should be made to the following detailed description of preferred embodiments and to the accompanying drawings.

### Brief Description of the Drawings

Fig. 1 is a perspective view of a bottle according to the invention.
Fig. 2 is a front elevational view of the bottle of Fig. 1.
Fig. 3 is a side elevational view of the bottle of Fig. 1.
Fig. 4 is a top plan view of the bottle of Fig. 1.
Fig. 5 is a bottom plan view of the bottle of Fig. 1.
Fig. 6 is an exploded view showing the bottle prior to insertion of a refill cartridge and closing with its cover.
Fig. 7 is a perspective view of a cartridge according to the invention.
Fig. 8 is a front elevational view of the cartridge of Fig. 7.
Fig. 9 is a side elevational view of the cartridge of Fig. 7.
Fig. 10 is a top plan view of the cartridge of Fig. 7.
Fig. 11 is a bottom plan view of the cartridge of Fig. 7.
Figs. 12-15 are partial cross sectional views of the cartridge of the invention prior to application of its closure from various angles.
Fig. 16 is a front elevational view of the pump and closure of the bottle of Fig. 1, together with a dip tube.
Fig. 17 is a side elevational view of the pump, closure and dip tube of Fig. 16.
Fig. 18 is a partial cross section of the bottle of Fig. 3.
Fig. 19 is a partial cross section from the bottle of Fig. 2.

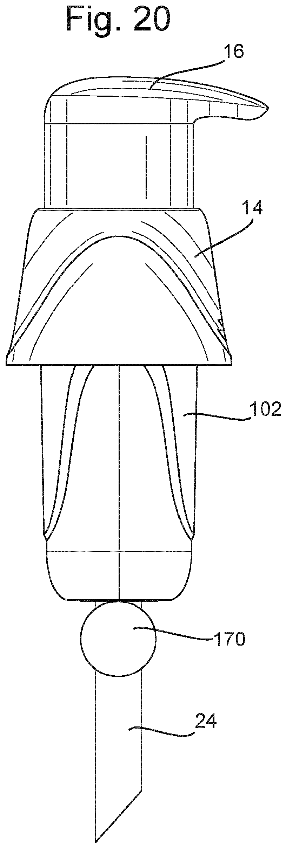

Fig. 20 is an elevation of Fig. 3 with the bottle removed and showing the door.

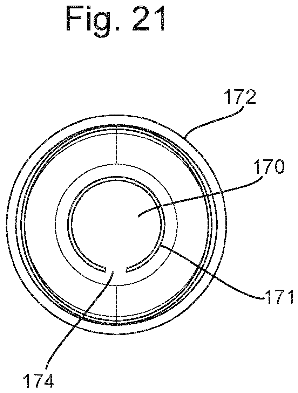

Fig. 21 is a top plan view of the cartridge of Fig. 9 but without the closure.

### Detailed Description of the Invention

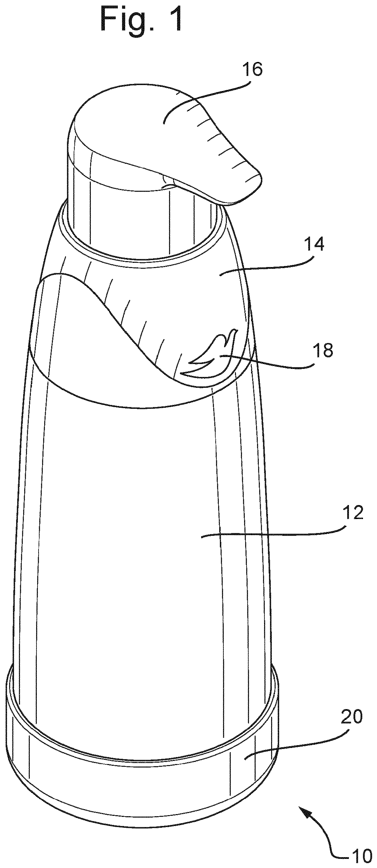

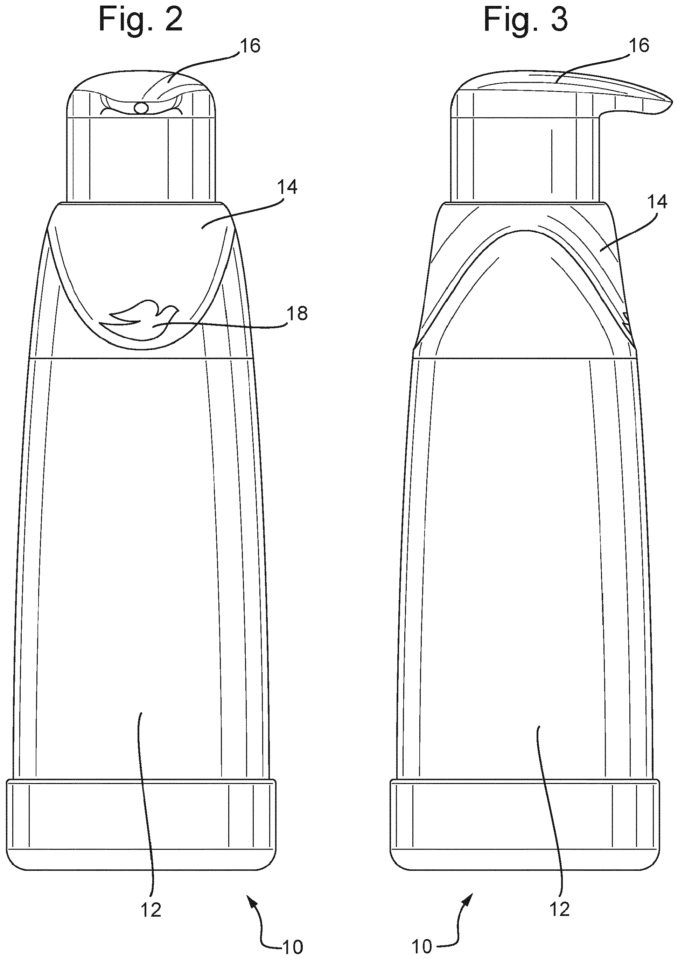

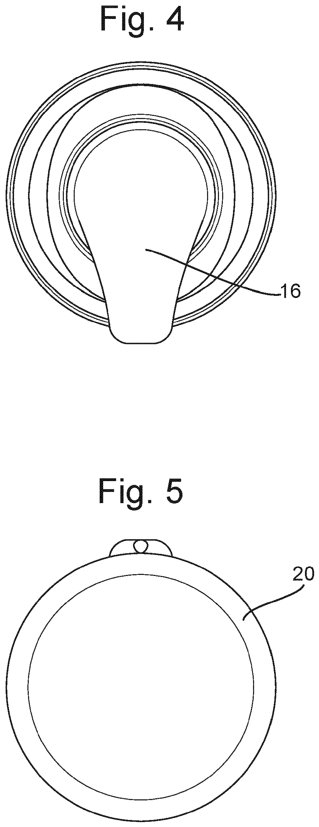

Bottle 10 (Figs. 1-4) includes body 12, closure 14 and pump head 16. An aperture or window 18 is disposed in closure 14, as will be discussed hereinafter. Body 12 is received in bottom sleeve 20. Sleeve 20 protects the bottom of the bottle from damage such as scuffs, scrapes and denting. It may be made of silicone. The bottle may be made of suitable plastic such as high density polyethylene, although to minimize plastic use it may advantageously be fabricated from stainless steel or aluminum. The pump and bottle closure may be made of high density polyethylene. Other materials of which the bottle could be made include glass and polyethylene terephthalate.

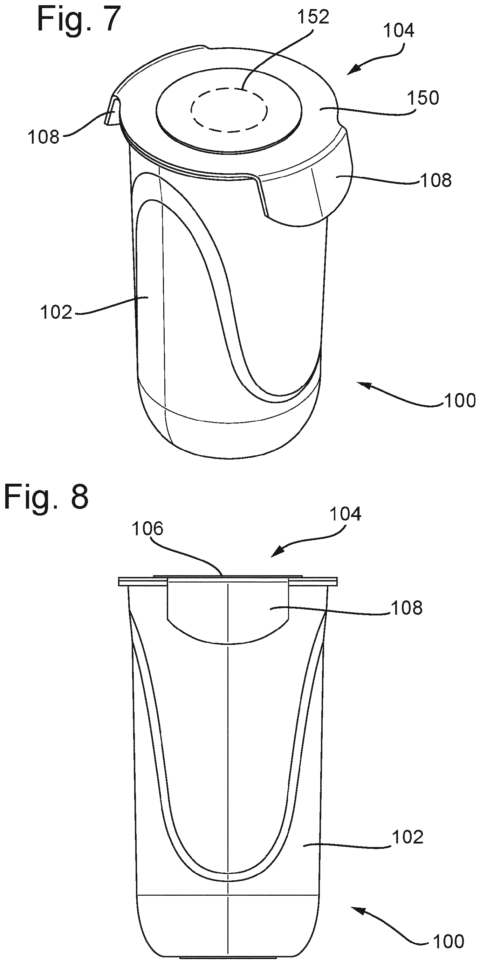

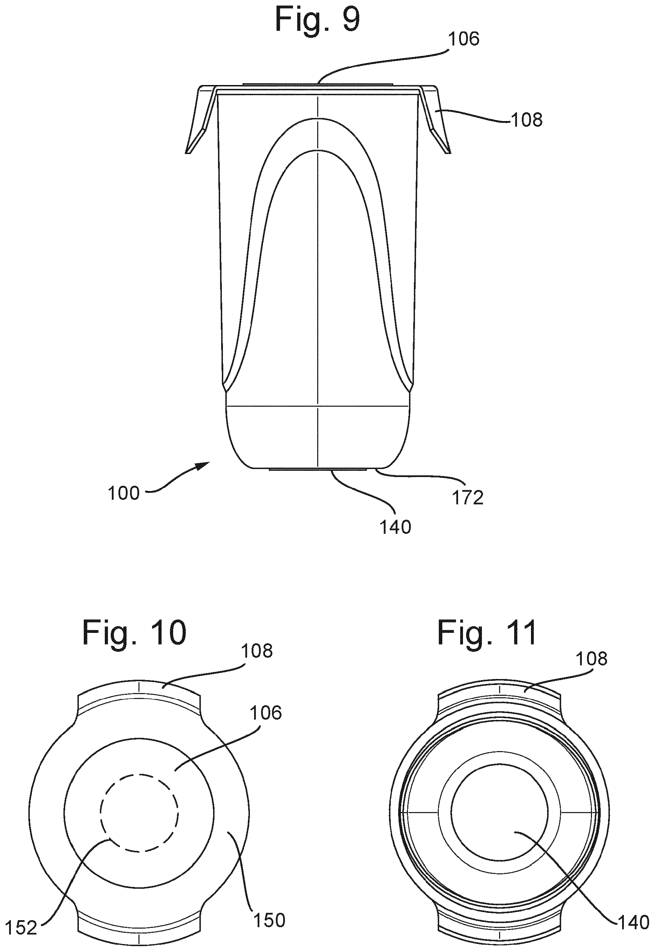

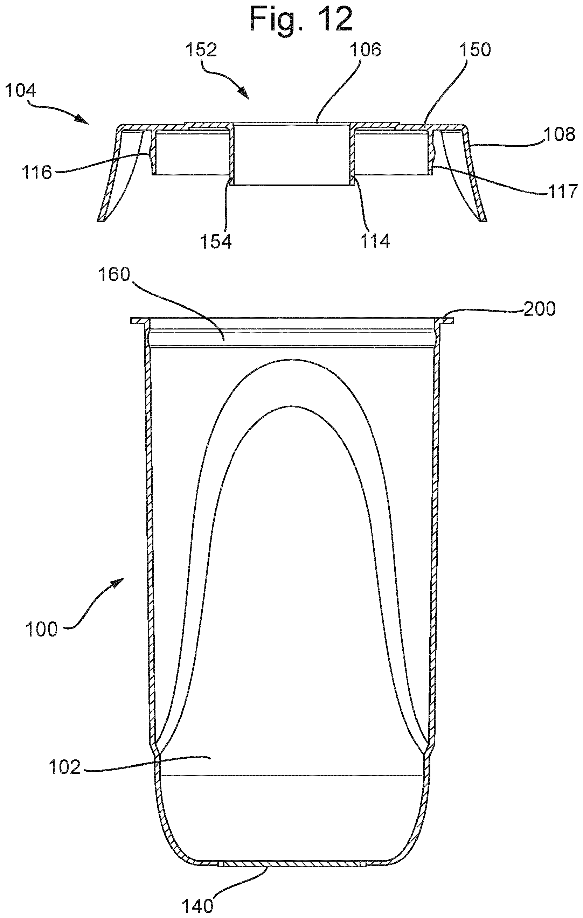

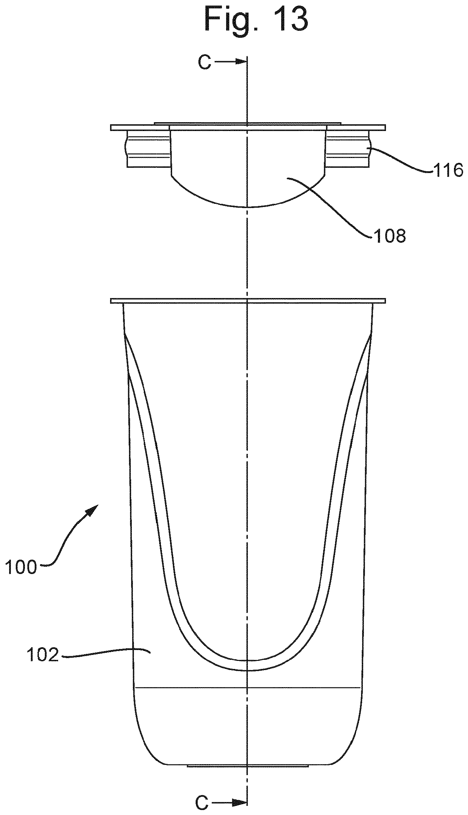

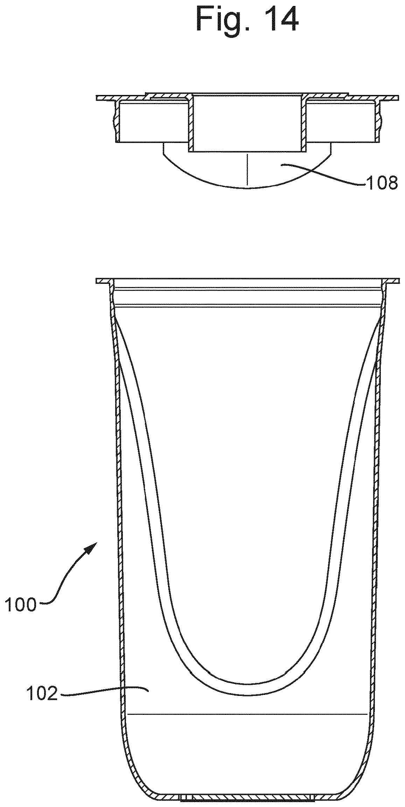

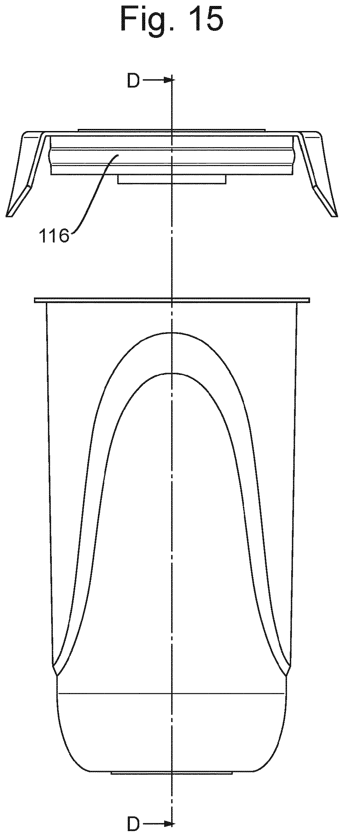

Cartridge 100 (Figs. 7-15) comprises body 102 and closure 104. Closure 104 includes opposed flaps 108 depending therefrom. Closure 104 includes closing platform 150 and an opening 152 defined by an inner cylindrical wall 154 (see e.g., Fig. 12) and sealed by in mold label (IML) seal 106. Outer cylindrical wall 117 having external protuberances 116 depends from platform 150. The cartridge may be made of high density polyethylene, and the IML may also be made of high density polyethylene. The IML must be made of a material which can be opened by the dip tube, with or without door 170. Other materials such as polypropylene may be suitable for the IML, depending on the barrier properties desired. The IML could also be multilayer of the same or different materials.

In general, product will be placed in the body of the cartridge by the manufacturer, who will secure the cartridge closure 150 to the cartridge, as by screwing or snapping them together. In the embodiment shown in Fig. 12 depending wall 117 has external protuberances 116 which are snapped into internal detents 160 inside the upper end of the body of the cartridge to secure the cartridge closure to the cartridge. Of course, other structures may be used to secure the cartridge closure to the cartridge. Flaps 108 extend downwardly along the outside of the cartridge from the top of the closure.

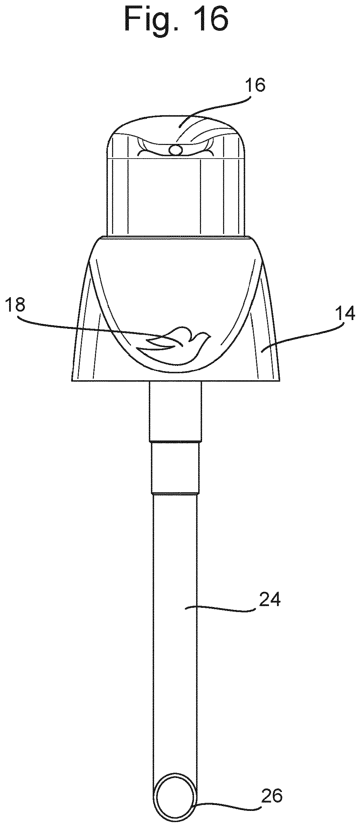

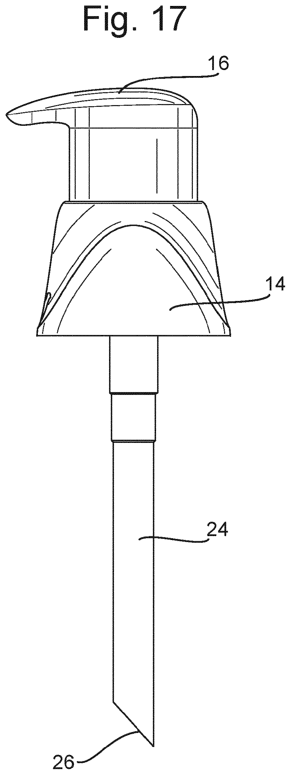

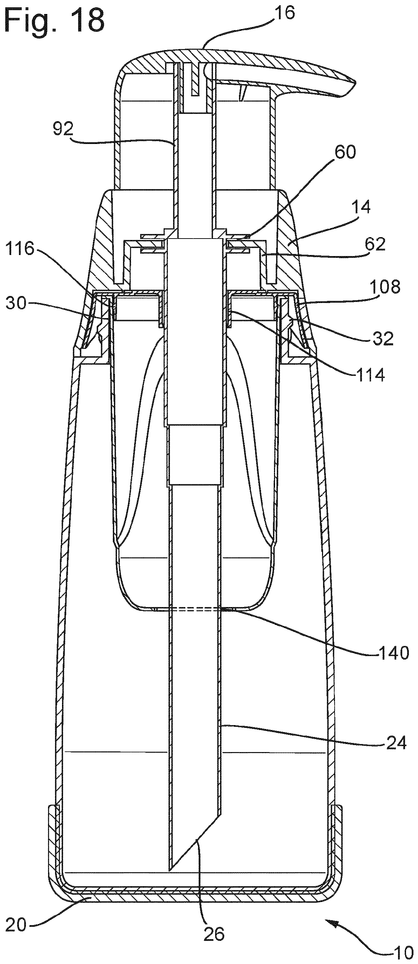

Preferably, the manufacturer will provide the bottle to the consumer with pump, bottle closure and dip tube attached as shown in Figs 16 and 17. As best seen in Fig 18, support prong 62 within bottle closure 14 is accommodated within clips 62 on the pump stem 92 to help secure the pump in the closure. The pump may be secured within the bottle structure using ribs, gaskets, or plastic.

The bottle may be provided with a first cartridge already in place, or the bottle may be empty of a cartridge. Assuming there is no cartridge in the bottle, or the cartridge is spent and has been removed, when ready to use the product, the consumer will remove the closure/pump/dip tube from the bottle and place water within the body of the bottle. Then the consumer inserts the cartridge into the bottle with ledge 200 (Fig. 12) of the cartridge resting on bottle neck 30. Flaps 108 extend downwardly from closure 104 on the outside of the neck 30.

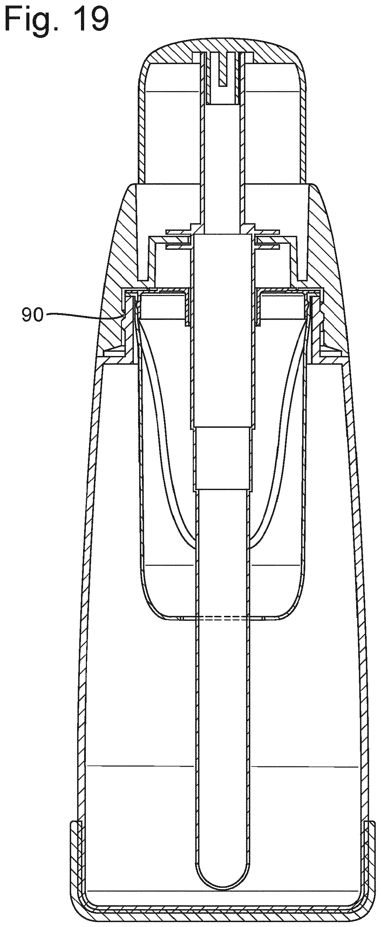

The combined bottle closure/pump head/dip tube shown in Figs 16 and 17 are then put in place. Closure 14 is screwed onto the bottle with external screws 32 on the bottle neck mating with internal screws 90 on the bottle closure (see Fig. 19). This secures the cartridge within the bottle. Dip tube 24 is beveled at 26 to facilitate penetration of seal 106 (Fig. 12) to permit the dip tube to enter into the cartridge through the opening 152 in the closure of the cartridge and then to push open door 170 in the bottom of the cartridge which then pushes open seal 140 beneath the cartridge to permit product to escape from the cartridge into the water-filled body 12 of the bottle. Door 170 is formed from a generally circular cut 171 in bottom 172 of the cartridge and preferably remains attached to bottom 172 at least at one point 174 which serves as a hinge. While the door 170 is illustrated as generally circular it may be of an suitable shape.

Figs. 18 and 19 show the structure of the bottle/cartridge combination once the bottle closure has been closed and the dip tube has been inserted through the cartridge to the bottom of the bottle, except that the door 170 is omitted.

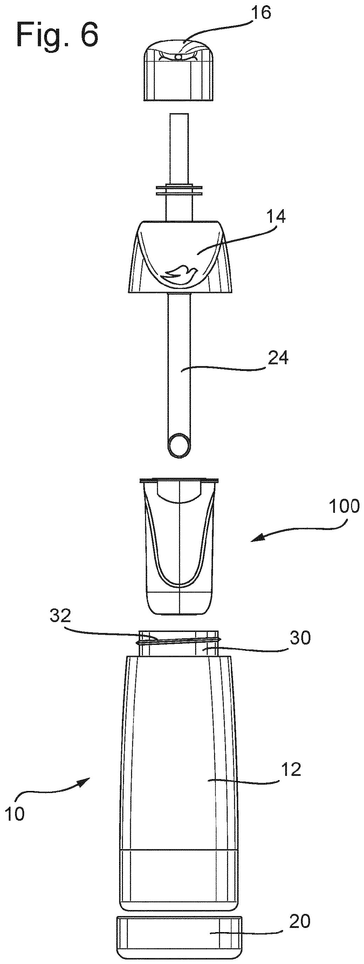

The relationships among the components of the bottle/refill can be seen in Fig. 6.

Once the cartridge/refill, pump and bottle closure are in place as seen in Fig. 18, the consumer presses on the pump head to pump the diluted product from the body of the bottle. When the product is depleted, the consumer readily opens the bottle by unscrewing the closure and can then remove pump head/closure/dip tube from the refill the and the refill from the bottle body. The refill can be discarded, or more preferably, recycled, and another one inserted.

When the bottle closure 14 is screwed onto the bottle, flaps 108 are received beneath the bottle closure, between the closure wall and the neck 30 of the bottle. In accordance with one feature of the invention, aperture or window 18 in the bottle closure is positioned so that when the closure is closed, the aperture will permit viewing of all or part of one or more of the flaps 108. If a window is used instead of an aperture, it may be a transparent or translucent plastic. Thus, the consumer can see part of the flap even though the bottle is closed. This permits the consumer to know which refill is present in the bottle if appropriate indicia such as color are present on the flaps. Alternatively, the one or more apertures or windows can be placed in the body of the bottle in addition, or instead of, the one in the closure, as long as a part of the cartridge will be visible from outside the bottle.

While the cartridge has been illustrated as having a sealed opening at the top and a sealed door at the bottom, other arrangements permitting insertion of a dip tube through the top and bottom may be possible. For instance, one or both may have a closure such as a flip top, which could be opened by consumers prior to insertion of the cartridge into the bottle. Thus, the cartridge will have a closed area at its top which will accommodate passing through of a dip tube, either through lines of weakness, which may be sealed, or sealed opening or reversible opening, and a closed area at the bottom which will a dip tube can open either through a cut or lines of weakness, which may be sealed, or sealed opening or reversible opening.

Suitable pumps may be obtained from Rieke Corp. of Auburn, Indiana. Suitable stainless steel bottles may be obtained from S'well Bottles of New York, NY. Suitable in mold labels may be obtained from CCL Industries of Shelton, CT.

## Claims

1. A cartridge (100) comprising a) a body (102) including a receptacle for receiving a product, and b) a top having a closure (104), wherein the closure (104) includes i) a closure platform (150) having an opening (152) including a closure seal (106) covering the opening, or ii) lines of weakness, and wherein a closure bottom (172) has i) an opening with a seal (140) or ii) lines of weakness, the opening with seal or lines of weakness being suitable to permit a dip tube (24) to penetrate said cartridge top and open said cartridge bottom **characterized in that** at least one of the closure seal (106) and the seal (140) of the closure bottom (172) of the cartridge comprises a seal including an in mold label.

2. The cartridge (100) according to claim 1 further comprising indicia visible from the outside of the cartridge.

3. The cartridge (100) according to claim 1 or 2 wherein the closure (104) comprises two opposing flaps (108) comprising wings, one on each side of the cartridge (100).

4. The cartridge (100) according to any one of the preceding claims, wherein the closure seal (106) comprises an in mold label.

5. The cartridge according to claim 4 wherein the in mold label comprises high density polyethylene.

6. The cartridge according to claim 4 wherein the closure seal (106) and the bottom seal (140) comprise an in-mold label.

7. The cartridge (100) according to any one of claims 1 to 6, wherein the cartridge bottom includes a door (170), the door is sealed by the seal and the door is openable when contacted with the dip tube (24) to open the seal.

8. The cartridge (100) according to claim 7, wherein the door (170) is formed in the bottom of the cartridge by a cut (171) and is attached to the bottom at a hinge (174).

9. A cartridge (100) according to anyone of the preceding claims combined with a bottle (10),
the cartridge closure (104) comprising at least one flap (108) extending downwardly from the top of the closure (104),
the cartridge (100) being received within the bottle (10),
an aperture or window (18) in at least one of a bottle closure (14) and a bottle body through which at least a portion of the flap (108) is visible when the bottle closure (14) is secured to the bottle (10).

10. The combined bottle (10) and cartridge (100) according to claim 9,
wherein the bottle (10) comprises a neck above the bottle body and the flap (108) extends downwardly adjacent the neck, and wherein the aperture or window (18) through which the flap (108) is visible is in the bottle closure whereby when the bottle closure is closed at least a portion of the flap (108) is visible through the aperture or window (18).

11. The combined bottle (10) and cartridge (100) of claim 9 or 10, further comprising a pump received within the bottle closure and a dip tube (24) extending downwardly from the pump, the dip tube (24) having an upper end adjacent the pump and a lower end.

12. The combined bottle (10) and cartridge (100) of claim 11, wherein the dip tube (24) includes a bevel (26) at its lower end for piercing the seal.

13. The combined bottle (10) and cartridge (100) according to any one of claims 9 to 12, wherein the bottle body includes a receptacle suitable for containing the cartridge (100).

14. The combined bottle (10) and cartridge (100) according to any one of claims 9 to 13, further comprising a pump received within the bottle closure (14).

## Patentansprüche

1. Kartusche (100), die Folgendes umfasst: a) einen Körper (102), der eine Hülle zum Aufnehmen eines Produkts umfasst, und b) ein oberes Teil, das einen Verschluss (104) hat, wobei der Verschluss (104) Folgendes umfasst: i) einen Verschlussabsatz (150), der eine Öffnung (152) hat, die eine Öffnungsabdichtung (106) umfasst, die die Öffnung bedeckt, oder ii) Schwächungslinien, und wobei ein Verschlussboden (172) i) eine Öffnung mit einer Abdichtung (140) oder ii) Schwächungslinien hat, wobei die Öffnung mit der Abdichtung oder den Schwächungslinien geeignet ist, zu ermöglichen, dass ein Tauchrohr (24) das obere Teil der Kartusche durchdringt und den Kartuschenboden öffnet, **dadurch gekennzeichnet, dass** die Verschlussabdichtung (106) und/oder die Abdichtung (140) des Verschlussbodens (172) der Kartusche eine Abdichtung umfassen, die eine vergossene Markierung aufweist.

2. Kartusche (100) nach Anspruch 1, die ferner Zeichen umfasst, die von außerhalb der Kartusche sichtbar sind.

3. Kartusche (100) nach Anspruch 1 oder 2, wobei der Verschluss (104) zwei gegenüberliegende Laschen (108) umfasst, die Flügel umfassen, eine auf jeder Seite der Kartusche (100).

4. Kartusche (100) nach einem der vorhergehenden Ansprüche, wobei die Verschlussabdichtung (106) eine vergossene Markierung umfasst.

5. Kartusche nach Anspruch 4, wobei die vergossene Markierung Hartpolyethylen umfasst.

6. Kartusche nach Anspruch 4, wobei die Verschlussabdichtung (106) und die Bodenabdichtung (140) eine vergossene Markierung umfassen.

7. Kartusche (100) nach einem der Ansprüche 1 bis 6, wobei der Kartuschenboden eine Luke (170) umfasst, wobei die Luke durch die Abdichtung abgedichtet ist und die Luke geöffnet werden kann, wenn sie mit dem Tauchrohr (24) in Kontakt kommt, um die Abdichtung zu öffnen.

8. Kartusche (100) nach Anspruch 7, wobei die Luke (170) durch einen Einschnitt (171) im Boden der Kartusche ausgebildet ist und mit einem Gelenk (174) am Boden befestigt ist.

9. Kartusche (100) nach einem der vorhergehenden Ansprüche, die mit einer Flasche (10) kombiniert wird,
wobei der Kartuschenverschluss (104) Folgendes umfasst:
wenigstens eine Lasche (108), die sich von der Oberseite des Verschlusses (104) nach unten erstreckt,
wobei die Kartusche (100) in der Flasche (10) aufgenommen ist,
eine Öffnung oder ein Fenster (18) im Flaschenverschluss (14) und/oder im Flaschenkörper, durch das wenigstens ein Abschnitt der Lasche (108) sichtbar ist, wenn der Flaschenverschluss (14) an der Flasche (10) befestigt ist.

10. Kombination aus Flasche (10) und Kartusche (100) nach Anspruch 9, wobei die Flasche (10) einen Hals oberhalb des Flaschenkörpers umfasst, wobei die Lasche (108) angrenzend an den Hals nach unten verläuft und wobei sich die Öffnung oder das Fenster (18), durch das die Lasche (108) sichtbar ist, im Flaschenverschluss befindet, wodurch dann, wenn der Flaschenverschluss geschlossen ist, wenigstens ein Abschnitt der Lasche (108) durch die Öffnung oder das Fenster (18) sichtbar ist.

11. Kombination aus Flasche (10) und Kartusche (100) nach Anspruch 9 oder 10, die ferner eine Pumpe, die im Flaschenverschluss aufgenommen ist, und ein Tauchrohr (24), das sich von der Pumpe nach unten erstreckt, umfasst, wobei das Tauchrohr (24) ein oberes Ende in der Nähe der Pumpe und ein unteres Ende hat.

12. Kombination aus Flasche (10) und Kartusche (100) nach Anspruch 11, wobei das Tauchrohr (24) an seinem unteren Ende eine Abschrägung (26) zum Durchstechen der Abdichtung umfasst.

13. Kombination aus Flasche (10) und Kartusche (100) nach einem der Ansprüche 9 bis 12, wobei der Flaschenkörper eine Hülle umfasst, die die Kartusche (100) aufnehmen kann.

14. Kombination aus Flasche (10) und Kartusche (100) nach einem der Ansprüche 9 bis 13, die ferner eine Pumpe umfasst, die im Flaschenverschluss (14) aufgenommen ist.

## Revendications

1. Cartouche (100) comprenant a) un corps (102) comprenant un réceptacle pour recevoir un produit, et b) un sommet ayant une fermeture (104), dans laquelle la fermeture (104) comprend i) une plateforme de fermeture (150) ayant une ouverture (152) comprenant un joint d'étanchéité de fermeture (106) recouvrant l'ouverture, ou bien ii) des lignes de faiblesse, et dans laquelle un fond de fermeture (172) a i) une ouverture avec un joint d'étanchéité (140) ou bien ii) des lignes de faiblesse, l'ouverture avec le joint d'étanchéité ou les lignes de faiblesse étant appropriée pour permettre à un tube plongeur (24) de pénétrer dans ledit sommet de cartouche et d'ouvrir ledit fond de cartouche, **caractérisée en ce qu'**au moins l'un parmi le joint d'étanchéité de fermeture (106) et le joint d'étanchéité (140) du fond de fermeture (172) de la cartouche comprend un joint d'étanchéité comprenant une étiquette dans le moule.

2. Cartouche (100) selon la revendication 1, comprenant en outre des indices visibles depuis l'extérieur de la cartouche.

3. Cartouche (100) selon la revendication 1 ou 2, dans laquelle la fermeture (104) comprend deux rabats (108) opposés comprenant des ailes, une de chaque côté de la cartouche (100).

4. Cartouche (100) selon l'une quelconque des revendications précédentes, dans laquelle le joint d'étanchéité de fermeture (106) comprend une étiquette dans le moule.

5. Cartouche selon la revendication 4, dans laquelle l'étiquette dans le moule comprend du polyéthylène haute densité.

6. Cartouche selon la revendication 4, dans laquelle le joint d'étanchéité de fermeture (106) et le joint d'étanchéité inférieur (140) comprend une étiquette dans le moule.

7. Cartouche (100) selon l'une quelconque des revendications 1 à 6, dans laquelle le fond de cartouche comprend une porte (170), la porte est scellée par le joint d'étanchéité et la porte peut s'ouvrir lorsqu'elle est en contact avec le tube plongeur (24) pour ouvrir le joint d'étanchéité.

8. Cartouche (100) selon la revendication 7, dans laquelle la porte (170) est formée au fond de la cartouche par une découpe (171) et est fixée au fond au niveau d'une charnière (174).

9. Cartouche (100) selon l'une quelconque des revendications précédentes, combinée à une bouteille (10),
la fermeture de cartouche (104) comprenant au moins un rabat (108) s'étendant vers le bas à partir du sommet de la fermeture (104),
la cartouche (100) étant reçue à l'intérieur de la bouteille (10),
une ouverture ou fenêtre (18) dans au moins l'une parmi une fermeture de bouteille (14) et un corps de bouteille à travers lequel au moins une partie du volet (108) est visible, lorsque la fermeture de bouteille (14) est fixée à la bouteille (10).

10. Bouteille (10) et cartouche (100) combinées selon la revendication 9, dans lesquelles la bouteille (10) comprend un goulot au-dessus du corps de bouteille et le rabat (108) s'étend vers le bas de manière adjacente au goulot, et dans lesquelles l'ouverture ou la fenêtre (18) à travers laquelle le volet (108) est visible, est dans la fermeture de bouteille, moyennant quoi lorsque la fermeture de bouteille est fermée, au moins une partie du rabat (108) est visible à travers l'ouverture ou la fenêtre (18).

11. Bouteille (10) et cartouche (100) combinées selon la revendication 9 ou 10, comprenant en outre une pompe reçue à l'intérieur de la fermeture de bouteille et un tube plongeur (24) s'étendant vers le bas à partir de la pompe, le tube plongeur (24) ayant une extrémité supérieure adjacente à la pompe et à une extrémité inférieure.

12. Bouteille (10) et cartouche (100) combinées selon la revendication 11, dans lesquelles le tube plongeur (24) comprend un biseau (26) au niveau de son extrémité inférieure pour percer le joint d'étanchéité.

13. Bouteille (10) et cartouche (100) combinées selon l'une quelconque des revendications 9 à 12, dans lesquelles le corps de bouteille comprend un réceptacle approprié pour contenir la bouteille (100).

14. Bouteille (10) et cartouche (100) combinées selon l'une quelconque des revendications 9 à 13, comprenant en outre une pompe reçue à l'intérieur de la fermeture de bouteille (14).
